# EUROPÄISCHE PATENTSCHRIFT

(11) **EP 3 933 218 B1**
(45) Veröffentlichungstag und Bekanntmachung des Hinweises auf die Patenterteilung: **03.01.2024**
(21) Anmeldenummer: 21183252.2
(22) Anmeldetag: 01.07.2021
(51) Int. Cl.: F16B 19/10, F16B 19/02

(54) **SPERRRIEGEL MIT SCHUTZ DER FÜHRUNGSELEMENTE**
LOCKING BAR WITH GUIDE ELEMENT PROTECTION
BOULON DE VERROUILLAGE AVEC PROTECTION DES ÉLÉMENTS DE GUIDAGE

(30) Priorität: 02.07.2020 DE 102020208328
(43) Veröffentlichungstag der Anmeldung: 05.01.2022
(73) Patentinhaber: ICG GmbH & Co. KG, 72172 Sulz am Neckar (DE)
(72) Erfinder: WEHLE, Marcel, 72160 Grünmettstetten (DE)
(74) Vertreter: Kohler Schmid Möbus Patentanwälte

(56) Entgegenhaltungen:
- US-A- 4 113 221
- US-B2- 9 833 656

## Beschreibung

Die Erfindung betrifft einen Sperrriegel zur Arretierung eines Bauteils oder eines Werkstücks, aufweisend:
- einen Griffhebel;
- einen Arretierstift, der mit einem hinteren Ende starr mit dem Griffhebel verbunden ist;
- eine Hülse, in der der Arretierstift entlang einer zentralen Längsachse verschiebbar und um die Längsachse drehbar gelagert ist,
   wobei der Arretierstift zumindest zwischen einer ausgefahrenen Stellung, in der ein vorderes Ende des Arretierstifts aus der Hülse herausragt, und einer eingefahrenen Stellung, in der das vordere Ende weiter in die Hülse zurückgezogen ist, insbesondere vollständig zurückgezogen ist, verschiebbar ist;
- ein Federelement, mit welchem der Arretierstift in eine der Stellungen, insbesondere die ausgefahrene Stellung, vorgespannt ist,
- ein erstes Führungselement und ein zweites Führungselement, mit denen beim Drehen des Griffhebels gegenüber der Hülse eine Verschiebung des Arretierstifts in der Hülse geführt wird, wobei das erste Führungselement und das zweite Führungselement aneinander abgleiten,
   wobei das erste Führungselement an der Hülse ausgebildet oder starr mit der Hülse verbunden ist und das zweite Führungselement am Griffhebel ausgebildet oder starr mit dem Griffhebel verbunden ist,
   wobei das erste Führungselement und das zweite Führungselement in einem abgeschlossenen Innenraum des Sperrriegels angeordnet sind, der von dem Griffhebel, der Hülse und/oder dem Arretierstift umgrenzt ist,
   wobei der Griffhebel eine Ausnehmung aufweist, die den abgeschlossenen Innenraum mit ausbildet, wobei ein hinteres Ende der Hülse innerhalb der Ausnehmung angeordnet ist, wobei der Griffhebel das hintere Ende der Hülse übergreift und die Hülse mit einer radial äußeren Randfläche an einer radial inneren Randfläche der Ausnehmung anliegt,
   und wobei eines der beiden Führungselemente einen Kragen ausbildet, der zumindest abschnittsweise bogenförmig um die zentrale Längsachse herum und in Richtung der Längsachse ansteigend verläuft.

Ein solcher Sperrriegel ist aus der US 9,833,656 B2 bekannt geworden.

Weitere Sperrriegel sind beispielsweise durch den Sperrriegel K0348 der Heinrich Kipp Werk KG, Sulz a.N., DE bekannt. Bei dem Sperrriegel K0348 ist ein Arretierstift mit einem Ende in einem Griffhebel befestigt. Der Arretierstift ist außerdem beweglich und drehbar in einer Hülse gelagert. Am oberen Ende der Hülse, das dem Griffhebel zugewandt ist, ist ein Kragen zur Führung des Griffhebels ausgebildet, der zwei einander gegenüberliegende Abschnitte aufweist, die an dem Mantel der Hülse entlang schräg zur Längsachse des Arretierstifts verlaufen. Durch Drehen des Griffhebels an der Führung entlang wird bei festgehaltener Hülse der Arretierstift entlang der Hülse verschoben.

Der Kurven-Rastriegel GN712 der Otto Ganter GmbH & Co. KG, Furtwangen, DE, weist einen Griffhebel, eine Hülse und einen in der Hülse dreh- und verschiebbar gelagerten, mit dem Griffhebel fest verbundenen Arretierstift auf, wobei die Hülse eine die Hülse durchbrechende Führungsnut umfasst, in der ein an dem Arretierstift befestigter Führungsstift geführt ist. Die Führungsnut ist in dem Mantel des Arretierstifts schräg zur Längsachse des Arretierstifts ausgebildet. Durch Drehen des Griffhebels und damit des Arretiertstifts und des Führungsstifts in der Führungsnut wird der Arretierstift in der Hülse verschoben.

Die US 9,833,656 B2 beschreibt ein Trainingsgerät mit einem verschwenkbaren Sitz für einen Anwender, an welchem ein Verriegelungsmechanismus verbaut ist. Dieser Verriegelungsmechanismus weist einen Sperrbolzen auf, der in einer Bolzenhülse drehbar gelagert und gegen die Kraft einer Feder in der Bolzenhülse axial verfahrbar ist und hinterenends in einem Nockenelement befestigt ist. Eine Vorderseite des Nockenelements und eine Hinterseite der Bolzenhülse sind mit Schrägflächen ausgebildet. Das Nockenelement ist an einem Umschalthebel angeordnet. Am Umschalthebel ist zudem ein Mantel ausgebildet, der den Bereich der Hinterseite der Bolzenhülse und der Vorderseite des Nockenelements umschließt.

### Aufgabe der Erfindung

Es ist die Aufgabe der Erfindung, einen Sperrriegel bereitzustellen, bei dem bei kompaktem Bau eine verbesserte Ausrichtung der Hülse am Griffhebel ermöglicht wird.

### Beschreibung der Erfindung

Diese Aufgabe wird erfindungsgemäß durch einen Sperrriegel gemäß Anspruch 1 gelöst, worin ein Aufnahmestutzen sich von einem Grund der Ausnehmung des Griffhebels weg und zumindest teilweise innerhalb der Ausnehmung erstreckt, wobei die Hülse den Aufnahmestutzen zumindest teilweise axial und radial umgreift, und das zweite Führungselement mit dem Kragen an dem Aufnahmestutzen des Griffhebels ausgebildet ist, wobei in dem Aufnahmestutzen das hintere Ende des Arretierstifts axial eingeschoben und gehalten ist.

Die Erfindung sieht vor, dass das erste Führungselement und das zweite Führungselement in einem abgeschlossenen Innenraum des Sperrriegels angeordnet sind, der von dem Griffhebel, der Hülse und/oder dem Arretierstift umgrenzt ist. Die Führungselemente sind in dem Innenraum gegen ein Eindringen von Fremdkörpern, insbesondere Schmutzpartikeln, geschützt. Dadurch wird die Gefahr eines Blockierens des Sperrriegels durch Fremdkörper minimiert. Die Führungselemente sind auch vor Krafteinwirkungen von außen besser geschützt. Entsprechend ist die Gefahr von Verformungen und Fehlfunktionen reduziert. Da das erste und zweite Führungselement nicht über die anderen Bestandteile des Sperrriegels wie die Hülse hinausstehen oder von außen zugänglich sind, verringert sich auch eine Verletzungsgefahr bei der Handhabung des Sperrriegels.

Der Innenraum ist insbesondere als Hohlraum, der von dem Griffhebel, der Hülse und dem Arretierstift umgeben ist, in dem Sperrriegel ausgebildet. Bevorzugt erstreckt sich der Innenraum in das Innere der Hülse hinein. Die Hülse, der Arretierstift, das erste und/oder das zweite Führungselement können aneinander anliegen. Der Arretiertstift wird auch als Bolzen bezeichnet. Zur Führung des Arretierstifts in der Hülse weist die Hülse vorzugsweise mindestens eine Bolzenführung auf, bevorzugt eine Bolzenführung an oder nahe dem hinteren, dem Griffhebel zugewandten Ende der Hülse, wobei die Bolzenführung vorzugsweise bei ausgefahrenem Arretierstift an dem zweiten Führungselement anliegt. Zur Führung des Arretierstifts in der Hülse weist der Arretierstift am vorderen, vom Griffhebel abgewandten Ende des Arretierstifts insbesondere einen Kopf des Arretierstifts auf, der im Vergleich zu einem Körper des Arretierstifts verbreitert ausgebildet ist und vorzugsweise an der Hülse anliegt, wodurch ebenfalls eine Bolzenführung ausgebildet werden kann. Zur Befestigung ist der Arretierstift insbesondere in den Griffhebel eingepresst.

Das erste und zweite Führungselement sind zu einer Verschiebung des Arretierstifts an der Hülse entlang unter Drehung des Arretierstifts ausgebildet. Durch Drehen des Griffhebels wird auch das zweite Führungselement bewegt, das mit dem Griffhebel starr verbunden ist. Dadurch gleitet das zweite Führungselement an dem ersten Führungselement ab, wobei das zweite Führungselement axial an dem ersten Führungselement verschoben wird, das mit der Hülse starr verbunden ist. Dadurch werden auch der Griffhebel, der mit dem zweiten Führungselement starr verbunden ist, und der mit dem Griffhebel verbundene Arretierstift axial an der Hülse entlang verschoben.

Das Federelement ist insbesondere mit einem Ende an dem Arretierstift und mit dem anderen Ende an der Hülse befestigt oder abgestützt. Vorzugsweise ist das Federelement als Schraubenfeder, insbesondere als Druckfeder, ausgebildet. Der Arretierstift wird in Bezug auf die Hülse durch das Federelement in eine der Stellungen vorgespannt. Das Federelement übt eine Kraft auf das erste und zweite Führungselement aus, die mit der Hülse bzw. dem Griffhebel starr verbunden sind, und die dadurch gegeneinander gedrückt werden. Die Federkraft kann unter anderem zur Verrastung der Führungselemente dienen, wenn eine der Stellungen des Arretierstifts, insbesondere die ausgefahrene Stellung des Arretierstifts, erreicht ist.

Bei dem erfindungsgemäßen Sperrriegel ist vorgesehen, dass der Griffhebel eine Ausnehmung aufweist, die den abgeschlossenen Innenraum mit ausbildet, wobei ein hinteres Ende der Hülse innerhalb der Ausnehmung angeordnet ist, wobei der Griffhebel das hintere Ende der Hülse übergreift und die Hülse mit einer radial äußeren Randfläche an einer radial inneren Randfläche der Ausnehmung anliegt. Die Anordnung eines Teils der Hülse in einer Ausnehmung ermöglicht eine kompakte Ausgestaltung des Sperrriegels. Insbesondere ist die Ausnehmung eine Aussparung oder Vertiefung des Griffhebels. Die Ausnehmung weist vorzugsweise eine durchgängige Umrandung auf. Insbesondere hat die Ausnehmung eine kreisförmige Umrandung bzw. eine zylindrische Innenfläche. Die Hülse mit ihrer bevorzugt zylindrischen Ausgestaltung ist vorzugsweise formschlüssig in die Ausnehmung eingefügt.

Bei dem erfindungsgemäßen Sperrriegel ist weiterhin vorgesehen, dass eines der beiden Führungselemente einen Kragen ausbildet, der zumindest abschnittsweise bogenförmig um die zentrale Längsachse herum und in Richtung der Längsachse ansteigend verläuft, insbesondere wobei der Kragen zumindest abschnittsweise entlang einer Schraubenlinie oder entlang einer schräg zur Längsachse verlaufenden Ebene verläuft. Der Kragen eines Führungselements umfasst insbesondere die Oberfläche oder den Teil der Oberfläche dieses Führungselements, an der das andere Führungselement abgleitet. Der Kragen kann an einem Ende oder innerhalb eines der Führungselemente ausgebildet sein. Wenn durch Drehung des Griffhebels die Führungselemente aneinander abgleiten, verschiebt sich das Führungselement, das über den Griffhebel mit dem Arretierstift verbunden ist, durch die Schräge des Kragens mit dem Arretierstift in axialer Richtung. Erfindungsgemäß weist das zweite Führungselement einen Kragen mit der vorgenannten Form auf.

Erfindungsgemäß ist vorgesehen, dass das zweite Führungselement mit dem Kragen an einem Aufnahmestutzen des Griffhebels ausgebildet ist, wobei in dem Aufnahmestutzen das hintere Ende des Arretierstifts axial eingeschoben und gehalten ist. Der Aufnahmestutzen ist insbesondere als ein, bevorzugt rohrförmiger, Hohlkörper ausgebildet. Die Länge des Aufnahmestutzens ist insbesondere größer als der Durchmesser des Aufnahmestutzens. Der Aufnahmestutzen weist vorzugsweise eine zylindrische Innen- und Außenfläche auf. Der Aufnahmestutzen umgreift den Arretierstift radial, wobei die zentrale Längsachse grundsätzlich entlang der Längsachse des Arretiertstifts verläuft.

Weiterhin sieht die Erfindung vor, dass der Aufnahmestutzen sich von einem Grund der Ausnehmung des Griffhebels weg und zumindest teilweise innerhalb der Ausnehmung erstreckt, wobei die Hülse den Aufnahmestutzen zumindest teilweise axial und radial umgreift. Insbesondere ist die Oberfläche an dem Ende des Aufnahmestutzens, das von dem Grund der Ausnehmung abgewandt ist, teilweise, vorzugsweise überwiegend, in der Ausnehmung und teilweise außerhalb der Ausnehmung angeordnet. Der Aufnahmestutzen, soweit er innerhalb der Hülse angeordnet ist, richtet die Hülse aus. Der Aufnahmestutzen erstreckt sich bevorzugt in einem rechten Winkel von dem Grund der Ausnehmung weg.

Das zweite Führungselement ist an dem Griffhebel ausgebildet oder angeordnet. Das erste Führungselement ist an der Hülse angeordnet oder ausgebildet. Die Hülse, der Arretierstift und/oder der Innenraum haben insbesondere eine zylindrische Form. Die Hülse weist bevorzugt eine glatte Außenwand oder ein an der Außenwand ausgebildetes Gewinde auf. In einer Ausführungsform weist die Hülse zur Anlage am Griffhebel eine oder mehrere Stufen an der Außenwand auf. Die Stufen sind bevorzugt in radialer Richtung so schmal, dass die Finger eines Benutzers des Sperrriegels nicht zwischen den Stufen und dem Griffhebel eingeklemmt werden. Der Arretierstift, die Hülse und/oder der Griffhebel weisen insbesondere Metall als Werkstoff auf.

### Bevorzugte Ausführungsformen des erfindungsgemäßen Sperrriegels

Bei einer vorteilhaften Ausführungsform sind das erste Führungselement und/oder das zweite Führungselement zumindest teilweise innerhalb der Ausnehmung angeordnet oder ausgebildet. Die Anordnung der Führungselemente in der Ausnehmung dient insbesondere der kompakten Ausgestaltung des Sperrriegels. Vorzugsweise ist das zweite Führungselement größtenteils in der Ausnehmung angeordnet. Bevorzugt ragt nur ein vorderes, von dem restlichen Griffhebel abgewandtes Ende des zweiten Führungselements aus der Ausnehmung heraus.

Vorteilhaft umgreift bei einer Ausführungsform die Hülse das zweite Führungselement radial. Das zweite Führungselement ragt in dieser Ausführungsform axial in die Hülse hinein. Dabei ist das zweite Führungselement drehbar innerhalb der Hülse gelagert. Das zweite Führungselement weist insbesondere eine längliche Form und/oder einen kreisförmigen Querschnitt auf. In dieser Ausführungsform bewirkt das zweite Führungselement eine Ausrichtung der Hülse, die auf das zweite Führungselement aufgeschoben ist. Bevorzugt befindet sich der Arretierstift innerhalb des zweiten Führungselements und ist in dem Griffhebel befestigt. Vorzugsweise ist die Strecke entlang der zentralen Längsachse, um die das zweite Führungselement in die Hülse hineinragt, bei der eingefahrenen und ausgefahrenen Stellung des Arretierstifts verschieden. Insbesondere umgreift die Hülse bei der ausgefahrenen Stellung des Arretierstifts die Außenseite des zweiten Führungselements vollständig; bei der eingefahrenen Stellung des Arretierstifts umgreift die Hülse nur das vordere Ende des zweiten Führungselements, das von dem Griffhebel abgewandt ist.

Bei einer vorteilhaften Ausführungsform ist das erste Führungselement an einem hinteren, dem Griffhebel zugewandten Ende der Hülse oder innerhalb der Hülse ausgebildet. Durch die Hülse kann das erste Führungselement vor Einwirkungen aus der äußeren Umgebung geschützt werden. Das erste Führungselement weist insbesondere eine Kante im Inneren der Hülse auf, an der das zweite Führungselement anliegt. Vorzugsweise ist das erste Führungselement im Inneren der Hülse axial beabstandet von dem Rand der Hülse ausgebildet, der dem Griffhebel zugewandt ist. In diesem Fall ragt das zweite Führungselement in die Hülse hinein, damit die Führungselemente aneinander abgleiten können. Dann sind beide Führungselemente durch die Hülse geschützt.

Vorteilhaft ist auch eine Ausführungsform, bei der der Kragen ringförmig geschlossen mit zwei spiegelsymmetrisch verlaufenden, einander gegenüberliegenden Abschnitten ausgebildet ist. Die Abschnitte verlaufen entlang des Kragens aufeinander zu. Das andere Führungselement (das den Kragen nicht aufweist) kann mit der gleichen Wirkung an jedem der beiden Abschnitte abgleiten. Insbesondere ermöglicht ein solcher Kragen eine vollständige Umdrehung des Griffhebels unter Vor- und Zurückschieben des Arretierstifts.

Bevorzugt ist eine Ausführungsform, bei der der Kragen wenigstens eine, bevorzugt zwei, Raststellen zur Verrastung des anderen der beiden Führungselemente aufweist, um den Arretierstift in der eingefahrenen Stellung und/oder in der ausgefahrenen Stellung zu verrasten. Vorzugsweise sind zwei oder mehr Raststellen entlang des Kragens ausgebildet, die bei einer geradzahligen Anzahl von Raststellen einander gegenüberliegen können. Durch die Verrastung der Führungselemente werden die Hülse und der Griffhebel aneinander verrastet, die mit den Führungselementen starr verbunden sind. Nach der Verrastung ist der Arretierstift fixiert, bevorzugt in jeweils einer Endlage, der eingefahrenen oder ausgefahrenen Stellung. Insbesondere übt dabei das Federelement eine Kraft aus, die die Führungselemente in einer Richtung entlang der zentralen Längsachse gegeneinander drückt, sodass das andere Führungselement (ohne den Kragen) in den Raststellen verrastet.

Bei einer vorteilhaften Weiterbildung bildet der Kragen zwei um 180° versetze Raststellen aus, insbesondere eine Rastnut und eine Rastfläche. Die Rastnut ist insbesondere als eine Vertiefung des Kragens ausgebildet, vorzugsweise zwischen den zwei spiegelsymmetrischen Abschnitten des Kragens. Die Rastfläche bildet insbesondere eine ebene Fläche des Kragens zwischen diesen Abschnitten, bevorzugt senkrecht zur der Längsachse des Führungselements mit dem Kragen. Die Rastfläche und die Rastnut liegen insbesondere versetzt entlang der Längsachse des Sperriegels. Dann wird der mit dem Griffhebel starr verbundene Arretierstift bei einer 180°-Drehung des Griffhebels in seiner eingefahrenen oder ausgefahrenen Stellung verrastet.

Eine bevorzugte Ausführungsform ist dadurch gekennzeichnet, dass das jeweils andere der beiden Führungselemente als ein Führungsnocken ausgebildet ist. Mit anderen Worten ist das Führungselement, das nicht den vorgenannten Kragen aufweist, als Führungsnocken ausgebildet. Der Führungsnocken hat insbesondere die Form eines länglichen Vorsprungs. Ein Führungsnocken lässt sich vorteilhaft vergleichsweise einfach herstellen, zum Beispiel durch ein Gießverfahren. Der Führungsnocken ist durch Eingriff in eine Vertiefung in dem Kragen, wie einer Führungsnut, leicht zu verrasten. Insbesondere ist das erste Führungselement als Führungsnocken ausgebildet, vorzugsweise an der Innenseite der Hülse.

Vorteilhaft ist eine Ausführungsform, bei der das erste Führungselement an einer Innenseite der Hülse radial nach innen vorspringend ausgebildet ist. Das erste Führungselement ist insbesondere als ein Führungsnocken an der Innenseite der Hülse ausgebildet. Das erste Führungselement ist durch die Hülse vor einer äußeren Einwirkung geschützt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt einen Querschnitt durch eine Ausführungsform eines erfindungsgemäßen Sperrriegels zur Arretierung eines Bauteils oder eines Werkstücks (nicht gezeigt) mit einem Arretierstift in einer eingefahrenen Stellung;
- Fig. 2: zeigt eine Seitenansicht des Sperrriegels in der Ausführungsform, wobei der Arretierstift in eine Hülse des Sperrriegels eingefahren ist;
- Fig. 3: zeigt eine perspektivische Ansicht der Hülse;
- Fig. 4: zeigt eine perspektivische Ansicht eines Griffhebels des Sperrriegels der Ausführungsform mit einem als Aufnahmestutzen ausgebildeten Führungselement von schräg unten;
- Fig. 5: zeigt einen Querschnitt durch den Griffhebel;
- Fig. 6: zeigt einen Querschnitt durch den Sperrriegel der Ausführungsform mit dem Griffhebel und dem Arretierstift in der ausgefahrenen Stellung;
- Fig. 7: zeigt eine Seitenansicht des Sperrriegels der Ausführungsform, wobei der Arretierstift aus der Hülse ausgefahren ist;

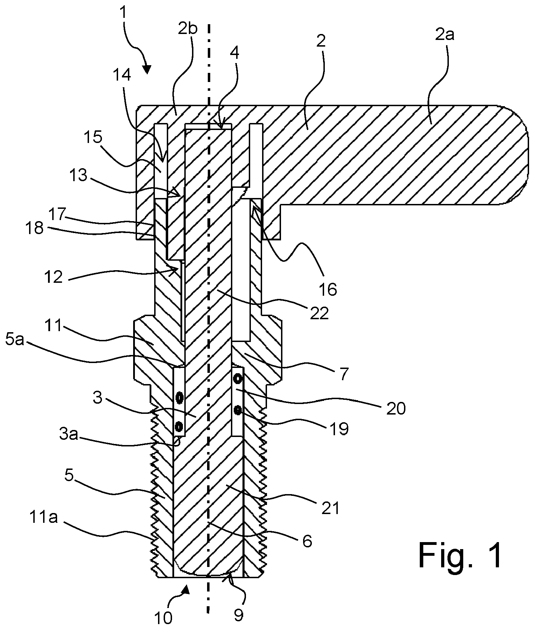

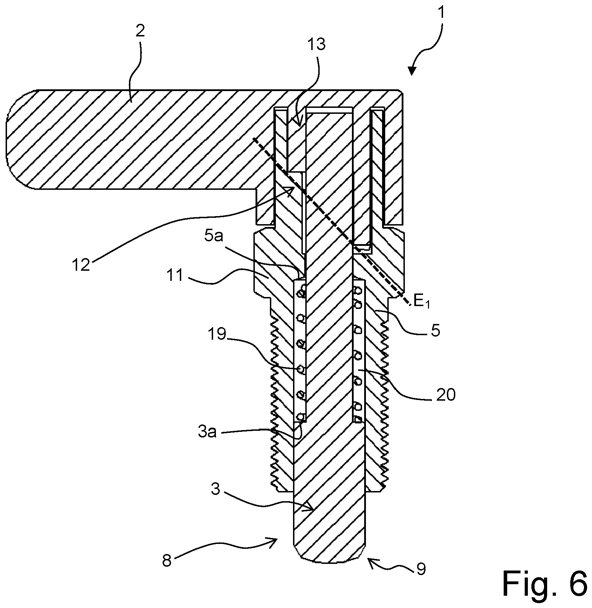

**Fig. 1** zeigt einen Querschnitt durch eine Ausführungsform eines Sperrriegels **1.** Zur Betätigung des Sperrriegels 1 dient ein drehbarer Griffhebel **2.** Ein Arretierstift **3** ist mit einem hinteren Ende **4** mit dem Griffhebel 2 starr verbunden, insbesondere durch Einpressen, und steht von dem Griffhebel 2 senkrecht ab. Durch den Arretierstift 3 kann ein Werkstück (nicht gezeigt) fixiert werden. Radial um den Arretierstift 3 herum ist eine von außen fixierbare Hülse **5** angeordnet, in der der Arretierstift 3 entlang einer zentralen Längsachse **6** verschiebbar ist. Der Arretierstift 3 lässt sich außerdem in der Hülse 5 um die Längsachse 6 drehen. Der Arretierstift 3 ist in der Hülse 5 durch eine hintere Bolzenführung **7** geführt. Insbesondere ist der Arretierstift 3 zwischen einer ausgefahrenen Stellung **8,** in der ein von dem Griffhebel 2 abgewandtes vorderes Ende **9** des Arretierstifts 3 aus der Hülse 5 herausragt (s. Fig. 6), und einer eingefahrenen Stellung **10,** in der das vordere Ende 9 vollständig zurückgezogen ist, verschiebbar. Der Griffhebel 2 wird um 180° gedreht, um den Arretierstift 3 zwischen diesen beiden Endstellungen 8, 10 zu verschieben (vgl. Fig. 1 und Fig. 6). An der Hülse 5 ist ein Sechskant **11** ausgebildet, um mit einem Schraubenschlüssel (nicht gezeigt) die Hülse 5 mit einem Außengewinde 11a in eine nicht gezeigte Struktur einzuschrauben.

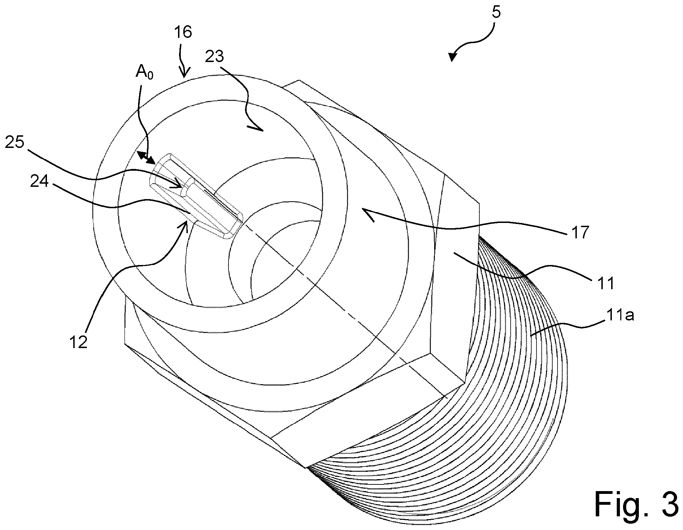

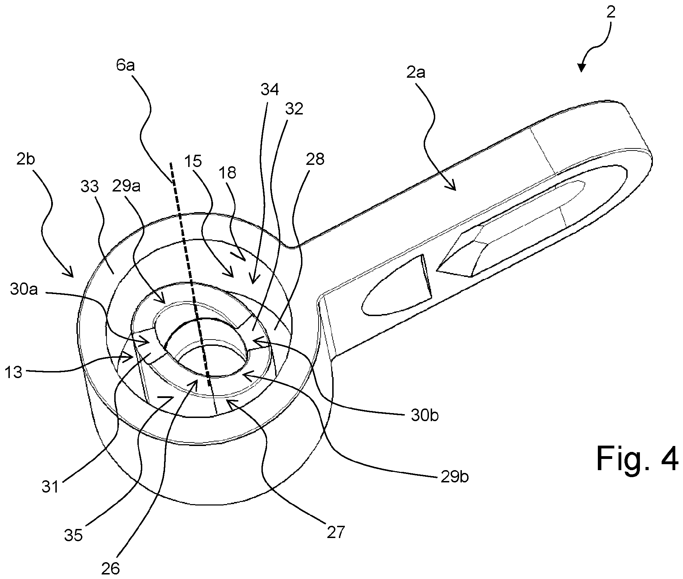

Der Griffhebel 2 weist einen länglichen Griff **2a** und einen in der Draufsicht kreisförmigen Griffhebelkopf **2b** auf (vgl. Fig. 4). Durch das Drehen des Griffhebels 2 wird auch der Arretierstift 3 in der Hülse 5 gedreht, wobei ein erstes und zweites Führungselement **12, 13** bei dieser Drehung aneinander abgleiten und eine Verschiebung des Arretierstifts 3 an der Hülse 5 entlang bewirken. Das erste Führungselement 12 und das zweite Führungselement 13 sind zum Schutz vor Verschmutzung und äußeren Krafteinwirkungen in einem Innenraum **14** des Sperrriegels 1 angeordnet. Der Innenraum 14 umfasst hier den Bereich einer Ausnehmung **15** des Griffhebels 2 und einen oberen Teil des Inneren der Hülse 5; der Innenraum 14 wird durch die Hülse 5, insbesondere durch die hintere Bolzenführung 7 der Hülse 5, den Griffhebel 2 und den Arretierstift 3 begrenzt. Ein hinteres Ende **16** der Hülse 5 ist innerhalb der Ausnehmung 15 des Arretierstifts 3 angeordnet. Die Hülse 5 liegt mit einer radial äußeren Randfläche **17** (vgl.. Fig. 3) an einer radial inneren Randfläche **18** (vgl.. Fig. 4) der Ausnehmung 15 an. Ein Federelement **19** ist in einer Innenaussparung **20** der Hülse 5 angeordnet. Vorzugsweise ist das Federelement 19 als Schraubenfeder ausgestaltet. Das Federelement 19 stützt sich am Arrertierstift 3 und der Hülse 5 an jeweiligen Schultern **3a, 5a** ab. Der Arretierstift 3 weist zur Führung in der Hülse 5 und zur Abstützung des Federelements 19 einen Kopf **21** auf, der im Vergleich zu einem Körper **22** des Arretierstifts 3, der sich an den Kopf 21 anschließt, verbreitert ausgebildet ist. Im montierten Zustand des Sperrriegels 1 ist das Federelement 21 stets unter Druckspannung vorgespannt. Durch die Druckspannung werden sowohl in der ausgefahrenen wie in der eingefahrenen Stellung der Griffhebel 2, der mit dem Arretierstift 3 fest verbunden ist, und die Hülse 5 gegeneinander gedrückt. Dadurch ist gewährleistet, dass die Führungselemente 12, 13 aneinander anliegen, die mit der Hülse 5 und dem Griffhebel 2 starr verbunden sind.

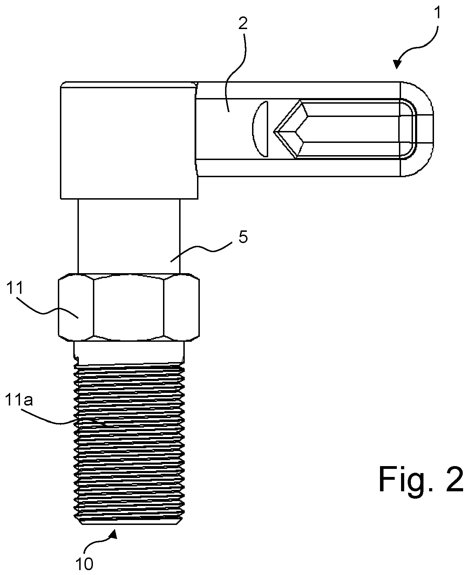

**Fig. 2** zeigt eine Seitenansicht des Sperrriegels 1 mit dem Arretierstift 3 in der eingefahrenen Stellung 10 (vgl. Fig. 1). Dargestellt ist insbesondere die Hülse 5 mit dem Außengewinde 11a und dem Sechskant 11.

**Fig. 3** zeigt eine perspektivische Ansicht der Hülse 5 mit dem Sechskant 11, der äu-ßeren Randfläche 17 und dem Außengewinde 11a. Das erste Führungselement 12 ist an einer Innenseite **23** der Hülse 5 als radial nach innen gerichteter, länglicher Vorsprung **24** ausgebildet, insbesondere als Führungsnocken **25.** Das erste Führungselement 12 weist einen von Null verschiedenen axialen Abstand **A₀** zu dem dem Griffhebel 2 (siehe Fig. 1) zugewandten hinteren Ende 16 der Hülse 5 auf.

**Fig. 4** zeigt eine perspektivische Ansicht des Griffhebels 2 von schräg unten. Der Griffhebel 2 weist den länglichen Griff 2a und einen in der Draufsicht kreisförmigen Griffhebelkopf 2b auf. Das zweite Führungselement 13 ist mit einem Kragen **26** an einem Aufnahmestutzen **27** des Griffhebels 2 ausgebildet, wobei im montierten Zustand des Sperrriegels 1 (siehe Fig. 1) in dem Aufnahmestutzen 27 das hintere Ende 4 des Arretierstifts 3 axial eingeschoben und hier im Presssitz gehalten ist. Der Aufnahmestutzen 27 erstreckt sich von einem Grund **28** der Ausnehmung 15 des Griffhebels 2 weg. Die Ausnehmung 15 weist die innere Randfläche 18 auf. Der Kragen 26 des Aufnahmestutzens 27 ist ringförmig geschlossen mit zwei bogenförmigen, spiegelsymmetrisch verlaufenden, einander gegenüberliegenden Abschnitten **29a, 29b** ausgebildet. Außerdem weist der Kragen 26 die zwei einander gegenüberliegende Raststellen **30a, 30b** zur Verrastung des ersten Führungselements 12 (siehe Fig. 1) auf, um den Arretierstift 3 in der eingefahrenen Stellung 10 und in der ausgefahrenen Stellung 8 zu verrasten, insbesondere durch die Druckspannung des Federelements 19. Durch die Druckspannung werden also die Führungselemente 12, 13 an den Raststellen 30a, 30b ineinander verrastet.

Die Raststellen 30a, 30b sind als Rastnut **31** und Rastfläche **32** ausgebildet. Die Rastnut 31 ist eine Vertiefung zwischen den beiden einander gegenüberliegenden Abschnitten 29a, 29b an deren hoch gelegenen Enden. Die Rastfläche 32 ist insbesondere als ebene Fläche senkrecht zu der Längsachse 6a des Aufnahmestutzens 27 ausgebildet, und liegt an den tief gelegenen Enden der Abschnitte 29a, 29b. Zwischen dem Aufnahmestutzen 27 und einer Umwandung **33** des Griffhebels 2 ist ein Aufnahmeschacht **34** als Teil der Ausnehmung 15 für die Hülse 5 ausgebildet. Eine Außenfläche **35** des Aufnahmestutzens 27 liegt an der Innenseite 23 der Hülse 5 (siehe Fig. 3) an.

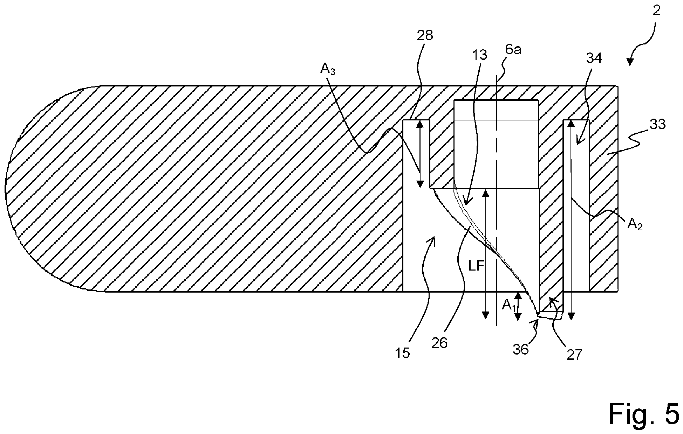

**Fig. 5** zeigt einen Querschnitt durch den Griffhebel 2. Nur ein vorderes Ende **36** des Aufnahmestutzens 27 ragt aus der Ausnehmung 15 mit einem von Null verschiedenen (axialen) Abstand **A₁** von der Ausnehmung 15 hinaus. Die im gezeigten Querschnitt gegenüberliegenden Seiten des zweiten Führungselements 13 überspannen in Richtung einer Längsachse **6a** des Aufnahmestutzens 27 eine Länge LF; die Länge LF entspricht der Differenz der (axialen) Abstände **A₂, A₃** vom Grund 28 der Ausnehmung 15 zum in Fig. 5 rechten Teil des zweiten Führungselements 13 (vgl. A₃) und zum in Fig. 5 linken Teil (vgl. A₂) des zweiten Führungselements 13 (A₂), also LF=A₂-A₃. Im montierten Zustand des Sperrriegels 1 fällt insbesondere die zentrale Längsachse 6 mit der Längsachse 6a des Aufnahmestutzens 24 zusammen. Der Kragen 26 ist hier wendelförmig ausgebildet; näherungsweise erstreckt sich der Kragen 26 entlang einer schräg zur Längsachse verlaufenden Ebene **E₁** (siehe Fig. 6). Dargestellt ist auch der Aufnahmeschacht 34 zwischen dem Aufnahmestutzen 27 und der Umwandung 33 des Griffhebels 2.

**Fig. 6** zeigt einen Querschnitt durch den Sperrriegel 1 mit dem Griffhebel 2 und dem Arretierstift 3 in der ausgefahrenen Stellung 8. Um von der ausgefahrenen Stellung 8 in die eingefahrene Stellung 10 (siehe Fig. 1) zu gelangen, muss das an den Schultern 3a, 5a abgestützte Federelement 19 in der Innenaussparung 20 der Hülse 5 entgegen der Federkraft weiter zusammengedrückt werden; entsprechend ist der Sperrriegel 1 in die ausgefahrene Stellung 8 vorgespannt. Das erste Führungselement 12 liegt innerhalb der Hülse 5 an dem zweiten Führungselement 13 an.

Bei ausgefahrener Stellung 8 des Arretierstifts 3 ist der Griffhebel 2 im Vergleich zu der Stellung 10, bei der der Arretierstift 3 eingezogen ist, (vgl. Fig. 1, Fig. 6) um 180° gedreht. Die Hülse 5 ist in der ausgefahrenen Stellung 8 bis zur der Position des Sechskant 11 an der Hülse 5 in den Aufnahmeschacht 34 (siehe Fig. 4) des Griffhebels 2 eingeführt. Das vordere Ende 9 des Arretierstifts 3 steht über die Hülse 5 hinaus.

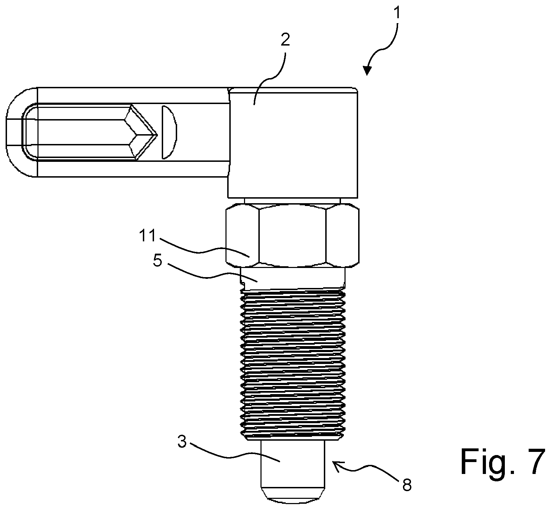

**Fig. 7** zeigt eine Seitenansicht des Sperrriegels 1 mit dem Arretierstift 3 in der ausgefahrenen Stellung 8. Der Sechskant 11 an der Hülse 5 liegt bei ausgefahrener Stellung 8 des Arretierstifts 3 fast an dem Griffhebel 2 an.

### Bezugszeichenliste

- 1: Sperrriegel
- 2: Griffhebel
- 2a: Griff
- 2b: Griffhebelkörper
- 3a: Schulter des Arretierstifts
- 3: Arretierstift
- 4: hinteres Ende des Arretierstifts
- 5: Hülse
- 5a: Schulter der Hülse
- 6: zentrale Längsachse
- 6a: Längsachse des Aufnahmestutzens
- 7: hintere Bolzenführung
- 8: ausgefahrene Stellung
- 9: vorderes Ende des Arretierstifts
- 10: eingefahrene Stellung des Arretierstifts
- 11: Sechskant
- 11a: Außengewinde
- 12: erstes Führungselement
- 13: zweites Führungselement
- 14: Innenraum
- 15: Ausnehmung
- 16: hinteres Ende der Hülse
- 17: radial äußerer Rand
- 18: radial innerer Rand
- 19: Federelement
- 20: Innenaussparung
- 21: Kopf des Arretierstifts
- 22: Körper des Arretierstifts
- 23: Innenseite der Hülse
- 24: Vorsprung
- 25: Führungsnocken
- 26: Kragen
- 27: Aufnahmestutzen
- 28: Grund der Ausnehmung
- 29a,b: einander gegenüberliegende Abschnitte des Kragens
- 30a,b: Raststellen
- 31: Rastnut
- 32: Rastfläche
- 33: Umwandung
- 34: Aufnahmeschacht
- 35: Außenfläche des Aufnahmestutzens
- 36: vorderes Ende des Aufnahmestutzens
- A₀: Abstand des ersten Führungselements zu dem hinteren Ende der Hülse
- A₁: Abstand des vorderen Endes des Aufnahmestutzens von der Ausnehmung
- A₂, A₃: Abstände vom Grund der Ausnehmung
- E₁: schräg zur Längsachse verlaufenden Ebene
- LF: axiale Länge des zweiten Führungselements

## Patentansprüche

1. Sperrriegel (1, 1', 1") zur Arretierung eines Bauteils oder eines Werkstücks, aufweisend:
- einen Griffhebel (2);
- einen Arretierstift (3), der mit einem hinteren Ende (4) starr mit dem Griffhebel (2) verbunden ist;
- eine Hülse (5), in der der Arretierstift (3) entlang einer zentralen Längsachse (6) verschiebbar und um die Längsachse (6) drehbar gelagert ist,
wobei der Arretierstift (3) zumindest zwischen einer ausgefahrenen Stellung (8), in der ein vorderes Ende (9) des Arretierstifts (3) aus der Hülse (5) herausragt, und einer eingefahrenen Stellung (10), in der das vordere Ende (9) weiter in die Hülse (5) zurückgezogen ist, insbesondere vollständig zurückgezogen ist, verschiebbar ist;
- ein Federelement (19), mit welchem der Arretierstift (3) in eine der Stellungen (8, 10), insbesondere die ausgefahrene Stellung (8), vorgespannt ist,
- ein erstes Führungselement (12) und ein zweites Führungselement (13), mit denen beim Drehen des Griffhebels (2) gegenüber der Hülse (5) eine Verschiebung des Arretierstifts (3) in der Hülse (5) geführt wird, wobei das erste Führungselement (12) und das zweite Führungselement (13) aneinander abgleiten,
wobei das erste Führungselement (12) an der Hülse (5) ausgebildet oder starr mit der Hülse (5) verbunden ist und das zweite Führungselement (13) am Griffhebel (2) ausgebildet oder starr mit dem Griffhebel (2) verbunden ist,
wobei das erste Führungselement (12) und das zweite Führungselement (13) in einem abgeschlossenen Innenraum (14) des Sperrriegels (1, 1', 1") angeordnet sind, der von dem Griffhebel (2), der Hülse (5) und/oder dem Arretierstift (3) umgrenzt ist,
wobei der Griffhebel (2) eine Ausnehmung (15) aufweist, die den abgeschlossenen Innenraum (14) mit ausbildet, wobei ein hinteres Ende (16) der Hülse (5) innerhalb der Ausnehmung (15) angeordnet ist, wobei der Griffhebel (2) das hintere Ende (16) der Hülse (5) übergreift und die Hülse (5) mit einer radial äußeren Randfläche (17) an einer radial inneren Randfläche (18) der Ausnehmung (15) anliegt,
und wobei eines der beiden Führungselemente (12, 13) einen Kragen (26) ausbildet, der zumindest abschnittsweise bogenförmig um die zentrale Längsachse (6) herum und in Richtung der Längsachse (6) ansteigend verläuft,
**dadurch gekennzeichnet,**
**dass** ein Aufnahmestutzen (27) sich von einem Grund (28) der Ausnehmung (15) des Griffhebels (2) weg und zumindest teilweise innerhalb der Ausnehmung (15) erstreckt, wobei die Hülse (5) den Aufnahmestutzen (27) zumindest teilweise axial und radial umgreift,
und **dass** das zweite Führungselement (13) mit dem Kragen (26) an dem Aufnahmestutzen (27) des Griffhebels (2) ausgebildet ist, wobei in dem Aufnahmestutzen (27) das hintere Ende (4) des Arretierstifts (3) axial eingeschoben und gehalten ist.

2. Sperrriegel nach Anspruch 1, **dadurch gekennzeichnet, dass** die Ausnehmung (15) eine durchgängige, kreisförmige Umrandung aufweist.

3. Sperrriegel nach Anspruch 1 oder 2, **dadurch gekennzeichnet, dass** das erste Führungselement (12) und/oder das zweite Führungselement (13) zumindest teilweise innerhalb der Ausnehmung (15) angeordnet oder ausgebildet sind.

4. Sperrriegel nach einem der vorhergehenden Ansprüche, **dadurch gekennzeichnet, dass** die Hülse (5) das zweite Führungselement (13) radial umgreift.

5. Sperrriegel nach einem der vorhergehenden Ansprüche, **dadurch gekennzeichnet, dass** das erste Führungselement (12) an einem hinteren, dem Griffhebel zugewandten Ende (16) der Hülse (5) oder innerhalb der Hülse (5) ausgebildet ist.

6. Sperrriegel nach einem der vorhergehenden Ansprüche, **dadurch gekennzeichnet, dass** der Kragen (26) zumindest abschnittsweise entlang einer Schraubenlinie oder entlang einer schräg zur Längsachse verlaufenden Ebene (E₁) verläuft.

7. Sperrriegel nach einem der vorhergehenden Ansprüche, **dadurch gekennzeichnet, dass** der Kragen (26) ringförmig geschlossen mit zwei spiegelsymmetrisch verlaufenden, einander gegenüberliegenden Abschnitten (29a, 29b) ausgebildet ist.

8. Sperrriegel nach einem der vorhergehenden Ansprüche, **dadurch gekennzeichnet, dass** der Kragen (26) wenigstens eine, bevorzugt zwei, Raststellen (30a, 30b) zur Verrastung des anderen der beiden Führungselemente (12, 13) aufweist, um den Arretierstift (3) in der eingefahrenen Stellung (10) und/oder in der ausgefahrenen Stellung (8) zu verrasten.

9. Sperrriegel nach Anspruch 8, **dadurch gekennzeichnet, dass** der Kragen (26) zwei um 180° versetze Raststellen (30a, 30b) ausbildet, insbesondere eine Rastnut (31) und eine Rastfläche (32).

10. Sperrriegel nach einem der vorhergehenden Ansprüche, **dadurch gekennzeichnet, dass** das jeweils andere der beiden Führungselemente (12, 13) als Führungsnocken (25) ausgebildet ist.

11. Sperrriegel nach einem der vorhergehenden Ansprüche, **dadurch gekennzeichnet, dass** eine Länge des Aufnahmestutzens (27) größer als ist ein Durchmesser des Aufnahmestutzens (27).

12. Sperrriegel nach einem der vorhergehenden Ansprüche, **dadurch gekennzeichnet, dass** der Aufnahmestutzen (27) sich in einem rechten Winkel von dem Grund (28) der Ausnehmung (15) weg erstreckt.

13. Sperrriegel nach einem der vorhergehenden Ansprüche, **dadurch gekennzeichnet, dass** das erste Führungselement (12) an einer Innenseite (23) der Hülse (5) radial nach innen vorspringend ausgebildet ist.

## Claims

1. A locking bar (1, 1', 1") for locking a component or a workpiece, having:
- a handle lever (2);
- a locking pin (3) that is rigidly connected to the handle lever (2) with a rear end (4);
- a sleeve (5) in which the locking pin (3) is displaceable along a central longitudinal axis (6) and rotatably mounted about the longitudinal axis (6),
wherein the locking pin (3) is displaceable at least between an extended position (8), in which a front end (9) of the locking pin (3) protrudes from the sleeve (5), and a retracted position (10), in which the front end (9) is retracted further into the sleeve (5), in particular completely retracted;
- a spring element (19) with which the locking pin (3) is prestressed into one of the positions (8, 10), in particular the extended position (8),
- a first guide element (12) and a second guide element (13), with which a displacement of the locking pin (3) in the sleeve (5) is guided when the handle lever (2) is rotated relative to the sleeve (5), wherein the first guide element (12) and the second guide element (13) slide against one another,
wherein the first guide element (12) is formed on the sleeve (5) or is rigidly connected to the sleeve (5) and the second guide element (13) is formed on the handle lever (2) or is rigidly connected to the handle lever (2),
wherein the first guide element (12) and the second guide element (13) are arranged in a closed inner space (14) of the locking bar (1, 1', 1"), which is delimited by the handle lever (2), the sleeve (5) and/or the locking pin (3),
wherein the handle lever (2) has a recess (15) that also forms the closed inner space (14), wherein a rear end (16) of the sleeve (5) is arranged inside the recess (15), wherein the handle lever (2) engages over the rear end (16) of the sleeve (5) and the sleeve (5) abuts with a radially outer edge surface (17) against a radially inner edge surface (18) of the recess (15),
and wherein one of the two guide elements (12, 13) forms a collar (26) that, at least in sections, runs in an arch-shaped manner about the central longitudinal axis (6) and rises in the direction of the longitudinal axis (6),
**characterized in that**
a receiving socket (27) extends away from a base (28) of the recess (15) of the handle lever (2) and at least partially inside the recess (15), wherein the sleeve (5) at least partially axially and radially encompasses the receiving socket (27),
**and in that** the second guide element (13) is formed with the collar (26) on the receiving socket (27) of the handle lever (2), wherein the rear end (4) of the locking pin (3) is axially inserted and held in the receiving socket (27).

2. The locking bar according to claim 1, **characterized in that** the recess (15) has a continuous circular border.

3. The locking bar according to claim 1 or 2, **characterized in that** the first guide element (12) and/or the second guide element (13) are arranged or formed at least partially inside the recess (15).

4. The locking bar according to any one of the preceding claims,
**characterized in that** the sleeve (5) radially encompasses the second guide element (13).

5. The locking bar according to any one of the preceding claims,
**characterized in that** the first guide element (12) is formed at a rear end (16) of the sleeve (5) that faces the handle lever or inside the sleeve (5).

6. The locking bar according to any one of the preceding claims,
**characterized in that** the collar (26) runs, at least in sections, along a helical line or along a plane (E₁) running obliquely to the longitudinal axis.

7. The locking bar according to any one of the preceding claims,
**characterized in that** the collar (26) is closed in a ring shape with two mirror-symmetrically running sections (29a, 29b) opposite to one other.

8. The locking bar according to any one of the preceding claims,
**characterized in that** the collar (26) has at least one, preferably two, latching points (30a, 30b) for latching the other of the two guide elements (12, 13), in order to latch the locking pin (3) in the retracted position (10) and/or in the extended position (8).

9. The locking bar according to claim 8, **characterized in that** the collar (26) forms two latching points (30a, 30b) offset by 180°, in particular a latching groove (31) and a latching surface (32).

10. A locking bar according to any one of the preceding claims,
**characterized in that** the respective other of the two guide elements (12, 13) is designed as a guide cam (25).

11. The locking bar according to any one of the preceding claims,
**characterized in that** a length of the receiving socket (27) is greater than the diameter of the receiving socket (27).

12. The locking bar according to any one of the preceding claims,
**characterised in that** the receiving socket (27) extends away from the base (28) of the recess (15) at a right angle.

13. The locking bar according to any one of the preceding claims,
**characterized in that** the first guide element (12) is designed to project radially inwards on an inner side (23) of the sleeve (5).

## Revendications

1. Verrou de blocage (1, 1', 1") conçu pour arrêter une partie structurelle ou une pièce d'usinage, comprenant :
- un levier (2) de prise en main ;
- une broche d'arrêt (3) reliée rigidement audit levier (2) de prise en main, par une extrémité postérieure (4) ;
- une douille (5) dans laquelle ladite broche d'arrêt (3) est montée avec faculté de déplacement le long d'un axe médian longitudinal (6), et de rotation autour dudit axe longitudinal (6),
laquelle broche d'arrêt (3) peut être déplacée au moins entre une position déployée (8), dans laquelle une extrémité antérieure (9) de ladite broche d'arrêt (3) fait saillie au-delà de la douille (5), et une position rétractée (10) dans laquelle ladite extrémité antérieure (9) est rentrée davantage dans ladite douille (5), notamment rentrée en totalité ;
- un élément élastique (19) par lequel la broche d'arrêt (3) est précontrainte vers l'une des positions (8, 10), en particulier vers la position déployée (8) ;
- un premier élément de guidage (12) et un second élément de guidage (13) à l'aide desquels un déplacement de la broche d'arrêt (3), dans la douille (5), est guidé lors de la rotation du levier (2) de prise en main par rapport à ladite douille (5), lesdits premier élément de guidage (12) et second élément de guidage (13) glissant alors l'un sur l'autre, ledit premier élément de guidage (12) faisant corps avec la douille (5), ou étant relié rigidement à ladite douille (5), et ledit second élément de guidage (13) faisant corps avec le levier (2) de prise en main, ou étant relié rigidement audit levier (2) de prise en main, sachant que lesdits premier élément de guidage (12) et second élément de guidage (13) sont logés dans un espace interne clos (14) du verrou de blocage (1, 1', 1") dont la périphérie est délimitée par le levier (2) de prise en main, par la douille (5) et/ou par la broche d'arrêt (3),
le levier (2) de prise en main étant muni d'un évidement (15) qui contribue à la formation de l'espace interne clos (14), une extrémité postérieure (16) de la douille (5) étant située à l'intérieur dudit évidement (15), sachant que ledit levier (2) de prise en main vient coiffer ladite extrémité postérieure (16) de la douille (5) et que ladite douille (5) est en applique, par une surface marginale (17) radialement extérieure, contre une surface marginale (18) radialement intérieure dudit évidement (15),
et sachant que l'un des deux éléments de guidage (12, 13) donne naissance à une collerette (26) qui s'étend en arc de cercle tout autour de l'axe médian longitudinal (6), au moins par zones, et décrit un tracé ascendant dans la direction dudit axe longitudinal (6), **caractérisé par le fait**
**qu'**un manchon récepteur (27) part d'un fond (28) de l'évidement (15) du levier (2) de prise en main et s'étend, au moins en partie, à l'intérieur dudit évidement (15), la douille (5) ceinturant au moins partiellement ledit manchon récepteur (27) dans les directions axiale et radiale ;
et par le fait que le second élément de guidage (13) fait corps, par la collerette (26), avec le manchon récepteur (27) du levier (2) de prise en main, l'extrémité postérieure (4) de la broche d'arrêt (3) étant insérée axialement, et retenue dans ledit manchon récepteur (27).

2. Verrou de blocage selon la revendication 1, **caractérisé par le fait que** l'évidement (15) est pourvu d'une délimitation périphérique circulaire et continue.

3. Verrou de blocage selon la revendication 1 ou 2, **caractérisé par le fait que** le premier élément de guidage (12) et/ou le second élément de guidage (13) est (sont) logé(s) ou façonné(s), au moins en partie, à l'intérieur de l'évidement (15).

4. Verrou de blocage selon l'une des revendications précédentes, **caractérisé par le fait que** la douille (5) ceinture radialement le second élément de guidage (13).

5. Verrou de blocage selon l'une des revendications précédentes, **caractérisé par le fait que** le premier élément de guidage (12) est façonné au niveau d'une extrémité postérieure (16) de la douille (5) qui pointe vers le levier de prise en main, ou à l'intérieur de ladite douille (5).

6. Verrou de blocage selon l'une des revendications précédentes, **caractérisé par le fait que** la collerette (26) s'étend, au moins par zones, le long d'une ligne hélicoïdale ou le long d'un plan (E₁) s'étendant à l'oblique par rapport à l'axe longitudinal.

7. Verrou de blocage selon l'une des revendications précédentes, **caractérisé par le fait que** la collerette (26) est de réalisation fermée en forme d'anneau, comprenant deux régions (29a, 29b) opposées l'une à l'autre et s'étendant avec symétrie spéculaire.

8. Verrou de blocage selon l'une des revendications précédentes, **caractérisé par le fait que** la collerette (26) comporte au moins une, de préférence deux positions d'encliquetage (30a, 30b) dévolue(s) au crantage de l'autre, au sein des deux éléments de guidage (12, 13), en vue d'encliqueter la broche d'arrêt (3) dans la position rétractée (10) et/ou dans la position déployée (8).

9. Verrou de blocage selon la revendication 8, **caractérisé par le fait que** la collerette (26) donne naissance à deux positions d'encliquetage (30a, 30b) décalées de 180°, en particulier à une rainure de crantage (31) et à une surface de crantage (32).

10. Verrou de blocage selon l'une des revendications précédentes, **caractérisé par le fait que** l'autre élément considéré, au sein des deux éléments de guidage (12, 13), est réalisé sous la forme d'une came de guidage (25).

11. Verrou de blocage selon l'une des revendications précédentes, **caractérisé par le fait qu'**une longueur du manchon récepteur (27) est supérieure à un diamètre dudit manchon récepteur (27).

12. Verrou de blocage selon l'une des revendications précédentes, **caractérisé par le fait que** le manchon récepteur (27) part du fond (28) de l'évidement (15) en décrivant un angle droit.

13. Verrou de blocage selon l'une des revendications précédentes, **caractérisé par le fait que** le premier élément de guidage (12) est de réalisation saillant vers l'intérieur, dans le sens radial, au niveau d'une face intérieure (23) de la douille (5).
